# EUROPEAN PATENT SPECIFICATION

(11) **EP 3 653 094 B1**
(45) Date of publication and mention of the grant of the patent: **02.11.2022**
(21) Application number: 18832054.3
(22) Date of filing: 10.07.2018
(51) Int. Cl.: A47L 9/00, A47L 9/28

(54) **CONTROL SYSTEM OF VACUUM CLEANER MOTOR, VACUUM CLEANER, AND CONTROL METHOD**
STEUERSYSTEM EINES STAUBSAUGERMOTORS, STAUBSAUGER UND STEUERVERFAHREN
SYSTÈME DE COMMANDE DE MOTEUR D'ASPIRATEUR, ASPIRATEUR ET PROCÉDÉ DE COMMANDE

(30) Priority: 14.07.2017 CN 201710575202
(43) Date of publication of application: 20.05.2020
(73) Proprietor: Skybest Electric Appliance (Suzhou) Co., Ltd., Suzhou, Jiangsu 215000 (CN)
(72) Inventor: KONG, Zhao, Suzhou Jiangsu 215000 (CN); GAO, Xiangyang, Suzhou Jiangsu 215000 (CN); LU, Jianyong, Suzhou Jiangsu 215000 (CN)
(74) Representative: Neilson, Martin Mark
(86) International application number: PCT/CN2018/095130
(87) International publication number: WO 2019/011233

(56) References cited:
- CN-A- 102 802 488
- CN-A- 103 369 995
- CN-U- 204 046 485
- JP-A- H0 614 856
- KR-A- 20160 092 825
- US-A1- 2014 223 688

## Description

### Field of the Invention

The present invention relates to a control system for a motor of a vacuum cleaner, a vacuum cleaner and a control method.

### Background of the Invention

The operating principle of a vacuum cleaner is: a motor drives a dynamic impeller to rotate, the rotation acts on air, the air in a dust cylinder is extracted, and the pressure in the cylinder and the atmospheric pressure form a pressure difference, so that objects around a suction port are sucked into the dust cylinder. When the vacuum cleaner is idle and does not suck objects, the speed of the motor is minimum, the current is maximum, and the suction force is minimum; when the suction tube is completely blocked by the objects, that is, when the objects and air cannot enter the dust cylinder, the dust cylinder is under vacuum, which is equivalent to no load on the motor, at this time, the speed of the motor is maximum, the current is minimum, and the suction force is maximum. The magnitude of the suction force is directly proportional to the speed and inversely proportional to the current.

When the vacuum cleaner operates, the opening of the suction port is between fully open and fully blocked, and the current and rotating speed of the motor change constantly according to the situation of sucking objects. At present, the change in suction force of the vacuum cleaner in the industry depends entirely on the characteristics of the motor. Due to the limitation of the characteristics of the motor, the suction force will not rise when reaching a certain value, so objects are stuck in the suction tube and cannot be sucked into the dust cylinder during use. The obstacles stuck in the suction tube can only be removed manually, or the motor is started manually to change the suction force frequently, so that the positions of the obstacles change after vibration in order to facilitate the suction into the dust cylinder, but great inconvenience is brought to the user.

An example of control of the motor of a vacuum cleaner is known from KR 2016 0092825 A.

### Summary of the Invention

The present invention aims to provide a control system for a motor of a vacuum cleaner, a vacuum cleaner and a control method, which can automatically remove an obstacle stuck in a suction tube of the vacuum cleaner, without manually removing the obstacle or frequently pressing a switch, thereby increasing user comfort.

In order to achieve one of the objectives of the present invention, an embodiment of the present invention provides a control system for a motor of a vacuum cleaner, the vacuum cleaner comprising a dust cylinder and a suction tube connected to the dust cylinder, wherein the control system for the motor of the vacuum cleaner comprises:
a controller driving the motor through an electric signal;
a driving circuit responding to instructions of the controller and providing the motor with power supply of different PWM values; and
a current detecting module for detecting current of the motor;
wherein the controller adjusts the power supply such that the power supply drives the motor to operate normally with a first PWM value; when the current detecting module detects that the current of the motor is less than a set current value for a first period of time, the controller sends a control signal for increasing the PWM value and decreasing the PWM value until N cycles to the driving circuit; and after the N cycles, the driving circuit drives the motor to operate normally with the first PWM value.

As a further improvement on the embodiment of the present invention, the set current value is greater than 0.5 times rated current and less than 0.8 times rated current.

As a further improvement on the embodiment of the present invention, the set current value is greater than 0.65 times rated current and less than 0.7 times rated current.

As a further improvement on the embodiment of the present invention, when the current of the motor is less than the set current value for the first period of time, the controller sends an instruction to the driving circuit, such that the driving circuit drives the motor to operate for a second period of time with the power supply of a second PWM value greater than the first PWM value, and the driving circuit drives the motor to operate for a third period of time with the power supply of a third PWM value less than the first PWM value.

As a further improvement on the embodiment of the present invention, the first PWM value is greater than or equal to 60% and less than or equal to 90%, the second PWM value is greater than 90% and less than or equal to 100%, and the third PWM value is greater than or equal to 20% and less than or equal to 40%.

As a further improvement on the embodiment of the present invention, the first PWM value is greater than or equal to 70% and less than or equal to 80%.

As a further improvement on the embodiment of the present invention, the third PWM value is greater than or equal to 25% and less than or equal to 35%.

As a further improvement on the embodiment of the present invention, the ranges of the second period of time and the third period of time are both 3 to 8 seconds.

As a further improvement on the embodiment of the present invention, the range of the second period of time is 4 to 6 seconds.

As a further improvement on the embodiment of the present invention, the range of the third period of time is 4 to 6 seconds.

As a further improvement on the embodiment of the present invention, the range of the first period of time is 3 to 10 seconds.

As a further improvement on the embodiment of the present invention, the range of the first period of time is 5 to 6 seconds.

As a further improvement on the embodiment of the present invention, the number N of cycles is 3 to 8 times.

As a further improvement on the embodiment of the present invention, the motor is a switched reluctance motor, a brushless direct-current motor or a brush direct-current motor.

In order to achieve one of the objectives of the present invention, an embodiment of the present invention also provides a vacuum cleaner, comprising a motor, a dust cylinder, a suction tube connected to the dust cylinder, and the control system for a motor of a vacuum cleaner according to any one of the above technical solutions.

In order to achieve one of the objectives of the present invention, an embodiment of the present invention also provides a control method for a motor of a vacuum cleaner, the vacuum cleaner comprising a dust cylinder and a suction tube connected to the dust cylinder, wherein the control method for the motor of the vacuum cleaner comprises:
a, providing a controller for adjusting power supply supplied to the motor;
b, the controller adjusting the power supply to drive the motor to operate normally with a first PWM value;
c, detecting current of the motor, until the current of the motor is less than a set current value for a first period of time;
d, the controller adjusting the power supply to drive the motor to operate for a second period of time with a second PWM value greater than the first PWM value;
e, the controller adjusting the power supply to drive the motor to operate for a third period of time with a third PWM value less than the first PWM value; and
f, cycling steps d and e by N times, and then turning to step b.

As a further improvement on the embodiment of the present invention, the set current value is greater than 0.5 times rated current and less than 0.8 times rated current.

As a further improvement on the embodiment of the present invention, the first PWM value is greater than or equal to 60% and less than or equal to 90%, the second PWM value is greater than 90% and less than or equal to 100%, and the third PWM value is greater than or equal to 20% and less than or equal to 40%.

As a further improvement on the embodiment of the present invention, the ranges of the second period of time and the third period of time are both 4 to 6 seconds.

As a further improvement on the embodiment of the present invention, the number N of cycles is 3 to 8 times.

As a further improvement on the embodiment of the present invention, the motor is a switched reluctance motor, a brushless direct-current motor or a brush direct-current motor.

Compared with the prior art, the present invention has the beneficial effects: the current of the motor is detected circularly; when the current of the motor is less than a set current value for a first period of time, the controller adjusts the PWM value of the power supply and sends a control signal for increasing the PWM value and decreasing the PWM value until N cycles to the driving circuit, such that the motor operates for a predetermined time with a PWM value greater than that of normal operation, and operates for another predetermined time with a PWM value less than that of normal operation, which is cycled N times; in the cycling process, the motor operates with the power supply of different PWM values, the suction force changes frequently, the obstacle vibrates under the changing force to change its position and is loosed, and the obstacle is adjusted to a position conducive to suction, thereby achieving the purpose of automatically removing the obstacle and sucking the obstacle into the dust cylinder; therefore, the obstacle stuck in the suction tube of the vacuum cleaner can be automatically removed, without manually removing the obstacle or frequently pressing a switch, which increases user comfort.

### Brief description of the Drawings

FIG. 1 is a module diagram of a control system for a vacuum cleaner according to a specific embodiment of the present invention;
FIG. 2 is a flowchart of a control method for the vacuum cleaner according to a specific embodiment of the present invention.

### Detailed Description of Embodiments

The present invention will be described in detail below with reference to specific embodiments shown in the accompanying drawings. However, these embodiments do not limit the present invention. Structures, methods, or functional transformations made by a person skilled in the art based on these embodiments are all included within the protection scope of the present invention.

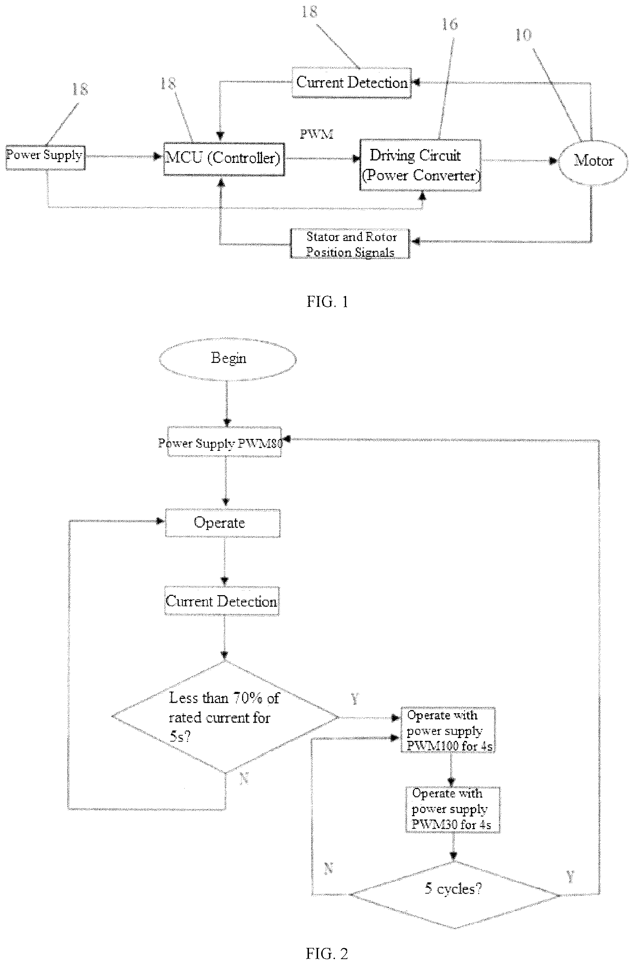

This preferred embodiment discloses a control system for a motor of a vacuum cleaner, wherein the vacuum cleaner comprises a dust cylinder (not shown) and a suction tube (not shown) connected to the dust cylinder. As shown in FIG. 1, the control system comprises a controller 14 driving the motor 10 through an electric signal, a driving circuit 16 responding to instructions of the controller 14 and providing the motor 10 with power supply 12 of different PWM values, and a current detecting module 18 for detecting current of the motor 10. The current detecting module 18 feeds back the detected current to the controller 14, the controller 14 judges according to different magnitudes of the current, and the driving circuit 16 provides the motor 10 with the power supply 12 of corresponding PWM values according to different instructions of the controller 14, thus adjusting the suction force of a suction tube. Specifically, the driving circuit is a power converter.

According to different motor specifications and different load sizes, the PWM value of the power supply 12, the current judgment standard, the number of cycles and the operating time in the cycle are different. In addition, the motor 10 can be supplied with direct current or alternating current. In this preferred embodiment, the motor 10 is a switched reluctance motor. Of course, other types of motors 10 such as a brushless direct-current motor or a brush direct-current motor can also be used.

When the motor 10 operates normally, the controller 14 adjusts the power supply 12 such that the power supply 12 drives the motor 10 with a first PWM value. When the current detecting module 18 detects that the current of the motor 10 is less than a set current value for a first period of time, the controller 14 sends a control signal for increasing the PWM value and decreasing the PWM value until N cycles to the driving circuit 16. After the N cycles, the driving circuit 16 drives the motor 10 to operate normally with the first PWM value.

Specifically, when the current of the motor 10 is less than the set current value for the first period of time, the controller 14 sends an instruction to the driving circuit 16, such that the driving circuit 16 drives the motor 10 to operate for a second period of time with the power supply 12 of a second PWM value greater than the first PWM value, and the driving circuit 16 drives the motor 10 to operate for a third period of time with the power supply 12 of a third PWM value less than the first PWM value.

Further referring to FIG. 2, a control method for a motor of a vacuum cleaner comprises the following steps: a, providing a controller 14 for adjusting power supply 12 supplied to the motor 10; b, the controller 14 adjusting the power supply 12 to drive the motor 10 with a first PWM value during normal operation; and c, frequently detecting current of the motor 10 during the operation of the vacuum cleaner, until the current of the motor 10 is less than a set current value for a first period of time. When an obstacle is stuck in a suction tube, the current of the motor 10 becomes low, so when the current is detected to be less than the set current value for a period of time, it indicates that the suction tube has been blocked. Then, the PWM value of the power supply 12 is adjusted circularly, so that the suction force changes repeatedly and the obstacle vibrates under the changing suction force. The control method further comprises the following steps: d, the controller 14 adjusting the power supply 12 to drive the motor 10 to operate for a second period of time with a second PWM value, wherein the second PWM value is greater than the first PWM value; e, the controller 14 adjusting the power supply 12 to drive the motor 10 with a third PWM value to operate for a third period of time, wherein the third PWM value is less than the first PWM value; and f, cycling steps d and e by n times, then performing step b again, and the controller 14 adjusting the power supply 12 to continue to drive the motor 10 to operate normally with the first PWM value. During the entire process of normal operation of the motor 10, the current of the motor 10 is detected all the time, and steps d and e are cycled as long as the current of the motor 10 is detected to be less than the set current value for the first period of time.

In this preferred embodiment, the current of the motor 10 is detected circularly. When the current of the motor 10 is less than a set current value for a first period of time, the controller 14 adjusts the PWM value of the power supply 12, such that the motor 10 operates for a predetermined time with a PWM value greater than that of normal operation, and operates for another predetermined time with a PWM value less than that of normal operation, which is cycled N times. In the cycling process, the motor 10 operates with the power supply 12 of different PWM values, the suction force changes frequently, the obstacle vibrates under the changing force to change its position and is loosed, and the obstacle is adjusted to a position conducive to suction, thereby achieving the purpose of automatically removing the obstacle and sucking the obstacle into the dust cylinder. Therefore, the obstacle stuck in the suction tube of the vacuum cleaner can be automatically removed, without manually removing the obstacle or frequently pressing a switch, which increases user comfort.

In step c, specifically, the set current value is greater than 0.5 times rated current and less than 0.8 times rated current. Further, the set current value is greater than 0.65 times rated current and less than 0.7 times rated current. Preferably, the set current value is selected from the group consisting of 55%, 60%, 65%, 70%, 75% and 80% of the rated current.

In this embodiment, the first PWM value is greater than or equal to 60% and less than or equal to 90%, the second PWM value is greater than 90% and less than or equal to 100%, and the third PWM value is greater than or equal to 20% and less than or equal to 40%. Further, the first PWM value is greater than or equal to 70% and less than or equal to 80%, the second PWM value is 100%, and the third PWM value is greater than or equal to 25% and less than or equal to 35%. Specifically, the first PWM value is selected from one of 60%, 70%, 80% and 90%, the second PWM value is selected from 95% or 100%, and the third PWM value is selected from one of 20%, 25%, 30%, 35% and 40%. Preferably, the first PWM value is 80%, the second PWM value is 100%, and the third PWM value is 30%.

In step c, the range of the first period of time is 3 to 10 seconds, and of course, may be other period of time. Further, the range of the first period of time is 5 to 6 seconds. Specifically, the first period of time may be any period of time within 3 to 10 seconds such as 3 seconds, 4 seconds, 5 seconds, 6 seconds or 8 seconds, and the first period of time is selected from any one of 3 to 10 seconds. Preferably, the first period of time is 5 seconds.

In step d, the range of the second period of time is 3 to 8 seconds. Further, the range of the second period of time is 4 to 6 seconds. Similarly, the second period of time is selected from any one of 3 to 8 seconds. Preferably, the second period of time is 4 seconds.

In step e, the range of the third period of time is 3 to 8 seconds. Further, the range of the third period of time is 4 to 6 seconds. The third period of time is also selected from any one of 3 to 8 seconds. The third period of time may be the same as or different from the second period of time and the first period of time. In this preferred embodiment, the third period of time is 4 seconds.

In this preferred embodiment, steps d and e are cycled 3 to 8 times. Further, steps d and e are cycled 4 to 6 times. Preferably, after 5 cycles, the controller 14 adjusts the power supply 12 to continue to operate normally with the first PWM value, and the detection of current continues.

Specifically, in this preferred embodiment, when the vacuum cleaner begins to operate, the motor 10 operates normally with 80% PWM of the power supply. During the operation, the current detecting module 18 frequently detects the current of the motor, the controller 14 determines whether the current is less than 70% of the rated current for 5 seconds. If not, the motor continues to operate normally with 80% PWM of the power supply, and the current detecting module 18 continues to detect the current. If yes, the controller 14 controls and adjusts the power supply 12 such that the motor 10 operates with 100% PWM value of the power supply for 4 seconds. Next, the controller 14 controls and adjusts the power supply 12 such that the motor 10 operates with 30% PWM value of the power supply for 4 seconds, and the cycle is repeated. The controller 14 determines whether the operation with 100% PWM value of the power supply for 4 seconds and the operation with 30% PWM value of the power supply for 4 seconds are cycled 5 times, if not, the cycle continues, and if yes, the controller 14 adjusts the power supply 12 to 80% PWM value to continue normal operation. In the process of cycling 5 times the operation with 100% PWM value of the power supply for 4 seconds and the operation with 30% PWM value of the power supply for 4 seconds, the controller 14 of the present invention automatically adjusts the PWM value of the power supply 12 of the motor 10, the suction force changes frequently, the obstacle vibrates under the changing force by 5 cycles to change its position and is loosed, and the obstacle is adjusted to a position conducive to suction, thereby achieving the purpose of automatically removing the obstacle and sucking the obstacle into the dust cylinder.

It should be understood that, although the Description is given according to the embodiments, but each embodiment does not include only one independent technical solution, this narrative manner of the Description is only for clarity, the Description shall be regarded as a whole for a person skilled in the art, and the technical solutions in the embodiments may also be properly combined to form other implementations that can be understood by a person skilled in the art.

## Claims

1. A control system for a motor of a vacuum cleaner, the vacuum cleaner comprising a dust cylinder and a suction tube connected to the dust cylinder, wherein the control system for the motor of the vacuum cleaner comprises:
a controller (14) driving the motor through an electric signal;
a driving circuit (16) responding to instructions of the controller (14) and providing the motor with power supply of different PWM values; and
a current detecting module (18) for detecting current of the motor;
wherein the controller adjusts the power supply (12) such that the power supply drives the motor to operate normally with a first PWM value; when the current detecting module detects that the current of the motor is less than a set current value for a first period of time, the controller sends a control signal for increasing the PWM value and decreasing the PWM value until N cycles to the driving circuit; and after the N cycles, the driving circuit drives the motor to operate normally with the first PWM value.

2. The control system for a motor of a vacuum cleaner according to claim 1, wherein the set current value is greater than 0.5 times rated current and less than 0.8 times rated current.

3. The control system for a motor of a vacuum cleaner according to claim 1 or 2, wherein when the current of the motor is less than the set current value for the first period of time, the controller sends an instruction to the driving circuit, such that the driving circuit drives the motor to operate for a second period of time with the power supply of a second PWM value greater than the first PWM value, and the driving circuit drives the motor to operate for a third period of time with the power supply of a third PWM value less than the first PWM value.

4. The control system for a motor of a vacuum cleaner according to claim 3, wherein the first PWM value is greater than or equal to 60% and less than or equal to 90%, the second PWM value is greater than 90% and less than or equal to 100%, and the third PWM value is greater than or equal to 20% and less than or equal to 40%.

5. The control system for a motor of a vacuum cleaner according to claim 4, wherein the first PWM value is greater than or equal to 70% and less than or equal to 80%.

6. The control system for a motor of a vacuum cleaner according to claim 4, wherein the third PWM value is greater than or equal to 25% and less than or equal to 35%.

7. The control system for a motor of a vacuum cleaner according to claim 3, wherein the ranges of the second period of time and the third period of time are both 3 to 8 seconds.

8. The control system for a motor of a vacuum cleaner according to claim 1, wherein the range of the first period of time is 3 to 10 seconds.

9. The control system for a motor of a vacuum cleaner according to claim 1, wherein the number N of cycles is 3 to 8 times.

10. The control system for a motor of a vacuum cleaner according to claim 1, wherein the motor is a switched reluctance motor, a brushless direct-current motor or a brush direct-current motor.

11. A vacuum cleaner, comprising a motor, a dust cylinder, a suction tube connected to the dust cylinder, and the control system for a motor of a vacuum cleaner according to any one of claims 1, 2 and 4 to 10.

12. A control method for a motor of a vacuum cleaner, the vacuum cleaner comprising a dust cylinder and a suction tube connected to the dust cylinder, wherein the control method for the motor of the vacuum cleaner comprises:
a, providing a controller (14) for adjusting power supply supplied to the motor;
b, the controller adjusting the power supply to drive the motor to operate normally with a first PWM value;
c, detecting current of the motor, until the current of the motor is less than a set current value for a first period of time;
d, the controller adjusting the power supply to drive the motor to operate for a second period of time with a second PWM value greater than the first PWM value;
e, the controller adjusting the power supply to drive the motor to operate for a third period of time with a third PWM value less than the first PWM value; and
f, cycling steps d and e by N times, and then turning to step b.

13. The control method for a motor of a vacuum cleaner according to claim 12, wherein the set current value is greater than 0.5 times rated current and less than 0.8 times rated current.

14. The control method for a motor of a vacuum cleaner according to claim 12 or 13, wherein the first PWM value is greater than or equal to 60% and less than or equal to 90%, the second PWM value is greater than 90% and less than or equal to 100%, and the third PWM value is greater than or equal to 20% and less than or equal to 40%.

15. The control method for a motor of a vacuum cleaner according to claim 12, wherein the ranges of the second period of time and the third period of time are both 4 to 6 seconds.

16. The control method for a motor of a vacuum cleaner according to claim 12, wherein the number N of cycles is 3 to 8 times.

## Patentansprüche

1. Steuersystem für einen Motor eines Staubsaugers, wobei der Staubsauger einen Staubzylinder und ein mit dem Staubzylinder verbundenes Saugrohr umfasst, wobei das Steuersystem für den Motor des Staubsaugers umfasst:
eine Steuerung (14), die den Motor durch ein elektrisches Signal ansteuert,
eine Ansteuerschaltung (16), die auf Befehle der Steuerung (14) reagiert und den Motor mit einer Stromversorgung mit unterschiedlichen PWM-Werten versorgt; und
ein Stromerfassungsmodul (18) zum Erfassen eines Stroms des Motors;
wobei die Steuerung die Stromversorgung (12) so einstellt, dass die Stromversorgung den Motor ansteuert, um mit einem ersten PWM-Wert normal zu arbeiten; wenn das Stromerfassungsmodul erfasst, dass der Strom des Motors kleiner als ein eingestellter Stromwert für eine erste Zeitdauer ist, sendet die Steuerung an die Ansteuerschaltung ein Steuersignal zum Erhöhen des PWM-Werts und Verringern des PWM-Werts für N Zyklen; und nach den N Zyklen steuert die Ansteuerschaltung den Motor an, um mit dem ersten PWM-Wert normal zu arbeiten.

2. Steuersystem für einen Motor eines Staubsaugers nach Anspruch 1, wobei der eingestellte Stromwert größer als das 0,5-fache des Nennstroms und kleiner als das 0,8-fache des Nennstroms ist.

3. Steuersystem für einen Motor eines Staubsaugers nach Anspruch 1 oder 2, wobei die Steuerung, wenn der Strom des Motors für die erste Zeitdauer kleiner als der eingestellte Stromwert ist, einen Befehl an die Ansteuerschaltung sendet, so dass die Ansteuerschaltung den Motor ansteuert, um für eine zweite Zeitdauer mit der Stromversorgung mit einem zweiten PWM-Wert zu arbeiten, der größer als der erste PWM-Wert ist, und die Ansteuerschaltung den Motor ansteuert, um für eine dritten Zeitdauer mit der Stromversorgung mit einem dritten PWM-Wert zu arbeiten, der kleiner als der erste PWM-Wert ist.

4. Steuersystem für einen Motor eines Staubsaugers nach Anspruch 3, wobei der erste PWM-Wert größer als oder gleich 60% und kleiner als oder gleich 90% ist, der zweite PWM-Wert größer als 90% und kleiner als oder gleich 100% ist und der dritte PWM-Wert größer als oder gleich 20% und kleiner als oder gleich 40% ist.

5. Steuersystem für einen Motor eines Staubsaugers nach Anspruch 4, wobei der erste PWM-Wert größer als oder gleich 70% und kleiner als oder gleich 80% ist.

6. Steuersystem für einen Motor eines Staubsaugers nach Anspruch 4, wobei der dritte PWM-Wert größer als oder gleich 25 % und kleiner als oder gleich 35 % ist.

7. Steuersystem für einen Motor eines Staubsaugers nach Anspruch 3, wobei die Bereiche der zweiten Zeitdauer und der dritten Zeitdauer beide 3 bis 8 Sekunden betragen.

8. Steuersystem für einen Motor eines Staubsaugers nach Anspruch 1, wobei der Bereich der ersten Zeitdauer 3 bis 10 Sekunden beträgt.

9. Steuersystem für einen Motor eines Staubsaugers nach Anspruch 1, wobei die Anzahl N der Zyklen 3 bis 8 beträgt.

10. Steuersystem für einen Motor eines Staubsaugers nach Anspruch 1, wobei der Motor ein geschalteter Reluktanzmotor, ein bürstenloser Gleichstrommotor oder ein Bürstengleichstrommotor ist.

11. Staubsauger, umfassend einen Motor, einen Staubzylinder, ein mit dem Staubzylinder verbundenes Saugrohr und das Steuersystem für einen Motor eines Staubsaugers nach einem der Ansprüche 1, 2 und 4 bis 10.

12. Steuerverfahren für einen Motor eines Staubsaugers, wobei der Staubsauger einen Staubzylinder und ein mit dem Staubzylinder verbundenes Saugrohr umfasst, wobei das Steuerverfahren für den Motor des Staubsaugers umfasst:
a, Bereitstellen einer Steuerung (14) zum Einstellen der dem Motor zugeführten Stromversorgung;
b, wobei die Steuerung die Stromversorgung einstellt, um den Motor anzusteuern, um für einen normalen Betrieb mit einem ersten PWM-Wert zu arbeiten;
c, Erfassen eines Stroms des Motors, bis der Strom des Motors für eine erste Zeitdauer kleiner als ein eingestellter Stromwert ist;
d, wobei die Steuerung die Stromversorgung einstellt, um den Motor anzusteuern, um für eine zweite Zeitspanne mit einem zweiten PWM-Wert zu arbeiten, der größer als der erste PWM-Wert ist;
e, wobei die Steuerung die Stromversorgung einstellt, um den Motor anzusteuern, um für eine dritte Zeitspanne mit einem dritten PWM-Wert zu arbeiten, der kleiner als der erste PWM-Wert ist; und
f, zyklisches Ausführen der Schritte d und e N-mal und anschließendes Weitergehen zu Schritt b.

13. Steuerverfahren für einen Motor eines Staubsaugers nach Anspruch 12, wobei der eingestellte Stromwert größer als das 0,5-fache des Nennstroms und kleiner als das 0,8-fache des Nennstroms ist.

14. Steuerverfahren für einen Motor eines Staubsaugers nach Anspruch 12 oder 13, wobei der erste PWM-Wert größer als oder gleich 60 % und kleiner als oder gleich 90 % ist, der zweite PWM-Wert größer als 90 % und kleiner als oder gleich 100 % ist und der dritte PWM-Wert größer als oder gleich 20 % und kleiner als oder gleich 40 % ist.

15. Steuerverfahren für einen Motor eines Staubsaugers nach Anspruch 12, wobei die Bereiche der zweiten Zeitdauer und der dritten Zeitdauer beide 4 bis 6 Sekunden betragen.

16. Steuerverfahren für einen Motor eines Staubsaugers nach Anspruch 12, wobei die Anzahl N der Zyklen 3- bis 8-mal beträgt.

## Revendications

1. Système de commande pour un moteur d'un aspirateur, l'aspirateur comprenant un cylindre à poussière et un tube d'aspiration relié au cylindre à poussière, le système de commande pour le moteur de l'aspirateur comprenant :
un dispositif de commande (14) attaquant le moteur par l'intermédiaire d'un signal électrique ;
un circuit d'attaque (16) répondant aux instructions du dispositif de commande (14) et fournissant au moteur une alimentation électrique de différentes valeurs MLI ; et
un module de détection de courant (18) pour détecter le courant du moteur ;
dans lequel le dispositif de commande règle l'alimentation électrique (12) de telle sorte que l'alimentation électrique amène le moteur à fonctionner normalement avec une première valeur MLI ; lorsque le module de détection de courant détecte que le courant du moteur est inférieur à une valeur de courant de consigne pendant une première période de temps, le dispositif de commande envoie un signal de commande pour augmenter la valeur MLI et diminuer la valeur MLI jusqu'à N cycles au circuit d'attaque ; et après les N cycles, le circuit d'attaque amène le moteur à fonctionner normalement avec la première valeur MLI.

2. Système de commande pour un moteur d'un aspirateur selon la revendication 1, dans lequel la valeur de courant de consigne est supérieure à 0,5 fois le courant assigné et inférieure à 0,8 fois le courant assigné.

3. Système de commande pour un moteur d'un aspirateur selon la revendication 1 ou 2, dans lequel lorsque le courant du moteur est inférieur à la valeur de courant de consigne pendant la première période de temps, le dispositif de commande envoie une instruction au circuit d'attaque, de telle sorte que le circuit d'attaque amène le moteur à fonctionner pendant une deuxième période de temps avec l'alimentation électrique d'une deuxième valeur MLI supérieure à la première valeur MLI, et le circuit d'attaque amène le moteur à fonctionner pendant une troisième période de temps avec l'alimentation électrique d'une troisième valeur MLI inférieure à la première valeur MLI.

4. Système de commande pour un moteur d'un aspirateur selon la revendication 3, dans lequel la première valeur MLI est supérieure ou égale à 60 % et inférieure ou égale à 90 %, la deuxième valeur MLI est supérieure à 90 % et inférieure ou égale à 100 %, et la troisième valeur MLI est supérieure ou égale à 20 % et inférieure ou égale à 40 %.

5. Système de commande pour un moteur d'un aspirateur selon la revendication 4, dans lequel la première valeur MLI est supérieure ou égale à 70 % et inférieure ou égale à 80 %.

6. Système de commande pour un moteur d'un aspirateur selon la revendication 4, dans lequel la troisième valeur MLI est supérieure ou égale à 25 % et inférieure ou égale à 35 %.

7. Système de commande pour un moteur d'un aspirateur selon la revendication 3, dans lequel les plages de la deuxième période de temps et de la troisième période de temps sont toutes les deux 3 à 8 secondes.

8. Système de commande pour un moteur d'un aspirateur selon la revendication 1, dans lequel la plage de la première période de temps est 3 à 10 secondes.

9. Système de commande pour un moteur d'un aspirateur selon la revendication 1, dans lequel le nombre N de cycles est 3 à 8 fois.

10. Système de commande pour un moteur d'un aspirateur selon la revendication 1, dans lequel le moteur est un moteur à réluctance commutée, un moteur à courant continu sans balais ou un moteur à courant continu à balais.

11. Aspirateur, comprenant un moteur, un cylindre à poussière, un tube d'aspiration relié au cylindre à poussière, et le système de commande pour un moteur d'un aspirateur selon l'une quelconque des revendications 1, 2 et 4 à 10.

12. Procédé de commande pour un moteur d'un aspirateur, l'aspirateur comprenant un cylindre à poussière et un tube d'aspiration relié au cylindre à poussière, le procédé de commande pour le moteur de l'aspirateur comprenant les étapes consistant à :
a, fournir un dispositif de commande (14) pour régler l'alimentation électrique amenée au moteur ;
b, le dispositif de commande réglant l'alimentation électrique pour amener le moteur à fonctionner normalement avec une première valeur MLI ;
c, détecter le courant du moteur, jusqu'à ce que le courant du moteur soit inférieur à une valeur de courant de consigne pendant une première période de temps ;
d, le dispositif de commande réglant l'alimentation électrique pour amener le moteur à fonctionner pendant une deuxième période de temps avec une deuxième valeur MLI supérieure à la première valeur MLI ;
e, le dispositif de commande réglant l'alimentation électrique pour amener le moteur à fonctionner pendant une troisième période de temps avec une troisième valeur MLI inférieure à la première valeur MLI ; et
f, cycler les étapes d et e N fois, puis passer à l'étape b.

13. Procédé de commande pour un moteur d'un aspirateur selon la revendication 12, dans lequel la valeur de courant de consigne est supérieure à 0,5 fois le courant assigné et inférieure à 0,8 fois le courant assigné.

14. Procédé de commande pour un moteur d'un aspirateur selon la revendication 12 ou 13, dans lequel la première valeur MLI est supérieure ou égale à 60 % et inférieure ou égale à 90 %, la deuxième valeur MLI est supérieure à 90 % et inférieure ou égale à 100 %, et la troisième valeur MLI est supérieure ou égale à 20 % et inférieure ou égale à 40 %.

15. Procédé de commande pour un moteur d'un aspirateur selon la revendication 12, dans lequel les plages de la deuxième période de temps et de la troisième période de temps sont toutes les deux 4 à 6 secondes.

16. Procédé de commande pour un moteur d'un aspirateur selon la revendication 12, dans lequel le nombre N de cycles est 3 à 8 fois.
